# EUROPÄISCHE PATENTSCHRIFT

(11) **EP 0 844 694 B1**
(45) Veröffentlichungstag und Bekanntmachung des Hinweises auf die Patenterteilung: **01.03.2000**
(21) Anmeldenummer: 97118901.4
(22) Anmeldetag: 30.10.1997
(51) Int. Cl.: H01R 13/58, H02G 3/06

(54) **Klemmvorrichtung**
Clamping device
Dispositif de serrage

(30) Priorität: 22.11.1996 DE 19650017
(43) Veröffentlichungstag der Anmeldung: 27.05.1998
(73) Patentinhaber: KRONE Aktiengesellschaft, 14167 Berlin (DE)
(72) Erfinder: Weiss, Jürgen, 73732 Esslingen (DE); Murray, David Patrick, Easton, Bristol BS5 0UN (GB)

(56) Entgegenhaltungen:
- DE-A- 2 348 882
- DE-A- 2 750 713
- DE-A- 3 117 029
- DE-C- 4 334 615
- DE-U- 7 540 233
- US-A- 2 355 166
- US-A- 4 657 425

## Beschreibung

Die Erfindung bezieht sich auf eine Klemmvorrichtung, insbesondere Kabelklemmvorrichtung für die Kommunikations- und Datentechnik gemäß dem Oberbegriff des Patentanspruches 1.

Die bekannten Klemmvorrichtungen wie Rohrschellen oder Kabelschellen ermöglichen die Klemmung von Rohren, Schläuchen oder Kabeln jeweils nur für einen geringen Umfang an Durchmessern. Es können nur enge Durchmesserbereiche mit einer Klemmvorrichtung behandelt werden. Die geklemmten Gegenstände sind gegen ein Zerquetschen nicht geschützt, die Größe der Quetschung wird vom Ausführenden bestimmt und wird nicht durch die Klemmvorrichtung begrenzt.

Aus der DE 31 17 029 C2 ist eine Kabeldurchführung mit Zugentlastung vorbekannt, welche aus einem Klemmglied und einer Hülse besteht. Das Klemmglied, in den der festzuklemmende Gegenstand einzubringen ist, ist als ein mit Klemmbändern versehener Grundkörper ausgebildet. Die freien Enden der Klemmbänder sind in Ausnehmungen der Hülse untergebracht, derart daß bei einer relativen Drehung zwischen Hülse und Klemmglied der Innenraum im Klemmglied verringert wird. Nachteilig ist, daß die Klemmvorrichtung aus mehreren Teilen besteht, die zusammengesetzt werden müssen. Der Einbau der sich kreuzenden Klemmbänder ist fertigungstechnisch aufwendig und kostenintensiv.

Aus der DE 27 50 713 C3 eine Kabeldurchführung mit einer Zugentlastung vorbekannt. Bei dieser Anordnung sind an einem Innenteil ein Sperrflügelpaar angeordnet. Nach Einsetzen des Innenteils in ein Außenteil durch Drehen des Außenteils, werden die Sperrflügelpaare konzentrisch aufeinander zugeführt, bis das im Innenteil geführte Kabel eingeklemmt ist. Rastnasen am Innenteil verhindern ein Lösen des eingeklemmten Kabels. Nachteilig ist, daß die Klemmvorrichtung aus mehreren Teilen besteht, die zusammengesetzt werden müssen. Darüber hinaus ist das Sperrflügelpaar aufgrund seiner speziellen Formgebung mit einer elliptischen Außenwand schwer he rstellbar.

In der DE 43 34 615 C1 ist ein elektrischer Steckverbinder beschrieben, an den ein Schirmkontakt anklemmbar ist, um eine durchgehende Schirmung vom Kabel zum Steckverbinder zu schaffen. Der Kabelschirm wird dabei mit dem Schirmkontakt über eine Quetschverbindung leitend verbunden. Die Quetschverbindung wird mittels eines Quetschringes oder eines Kabelbinders vorgenommen. Auch hierbei ist nur eine unzureichende Anpassung an unterschiedliche Kabeldurchmesser erreichbar.

Der Erfindung liegt die Aufgabe zugrunde, eine Klemmvorrichtung der gattungsgemäßen Art zu entwickeln, mit der eine Klemmung von Gegenständen mit unterschiedlichen Durchmessern einfach und zuverlässig und ohne die Gefahr einer unzulässig hohen Quetschung des Gegenstandes gewährleistet ist.

Die Lösung dieser Aufgabe ergibt sich aus den kennzeichnenden Merkmalen des Anspruches 1. Der nach der Erfindung ausgebildete Klemmkörper gewährleistet in Verbindung mit der erfindungsgemäß ausgebildeten Hülse die Zugentlastung und/oder die vollflächige (360 °) Weiterführung der Schirmung von Kabeln mit unterschiedlichen Durchmessern bzw. allgemein die Festklemmung von Gegenständen unterschiedlicher Durchmesser mit einer einzigen Klemmvorrichtung.

Die Dimensionierung der Klemmarme nach dem Verwendungszweck bewirkt, daß eine definierte Kraft auf den Gegenstand bzw. auf ein Kabel ausgeübt wird, die nicht überschritten werden kann, so daß keine Gefahr der unzulässig hohen Quetschung des Gegenstandes besteht.

Durchmesseränderungen des Klemmkörpers der Klemmvorrichtung sind durch ein einfaches Verdrehen der Hülse in weitem Umfang möglich.

Die Klemmvorrichtung schafft eine lösbare Verbindung und ist wiederverwendbar.

Weitere vorteilhafte Ausgestaltungen der Erfindung ergeben sich aus den Unteransprüchen.

Die Erfindung ist nachfolgend anhand von in den Zeichnungen dargestellten Ausführungsbeispielen einer Klemmvorrichtung für Kabel näher erläutert. Es zeigen:
- Fig. 1: eine Explosionsdarstellung der Klemmvorrichtung in runder Ausführung des Klemmkörpers,
- Fig. 2: eine perspektivische Darstellung eines quadratisch ausgebildeten Klemmkörpers,
- Fig. 3: die perspektivische Darstellung der Hülse,
- Fig. 4: eine Schnittdarstellung der Klemmvorrichtung mit quadratischem, in die Hülse eingeschobenem Klemmkörper,
- Fig. 5: die Schnittdarstellung der Klemmvorrichtung nach Fig. 4 mit leicht gespannten Klemmarmen und
- Fig. 6: eine Schnittdarstellung der Klemmvorrichtung nach Fig. 4 mit stark gespannten Klemmarmen für dünne Kabeladern.

Die Klemmvorrichtung ist neben ihrer allgemeinen Verwendung insbesondere für die Anwendung in der Telekommunikations- und Datentechnik als Kabelklemmvorrichtung für geschirmte Kabel vorteilhaft einsetzbar. In Verbindung mit zum Beispiel RJ 45-Buchsen gewährleistet die Klemmvorrichtung nach der Erfindung eine zuverlässige Zugentlastung und eine vollflächige, 360 °-Fortführung der Kabelschirmung zur Buchse.

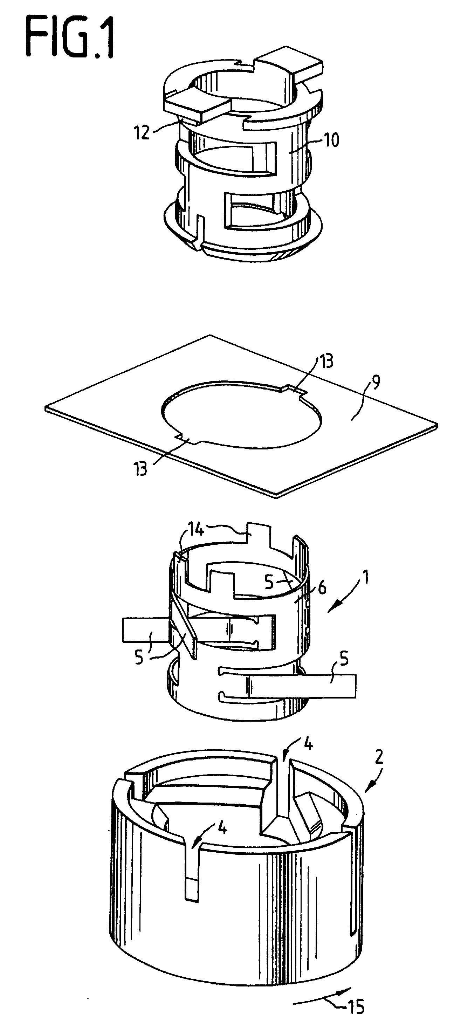

In der Fig. 1 ist eine Kabelklemmvorrichtung dargestellt, die im wesentlichen aus einem runden Klemmkörper 1, gebildet aus einem Grundkörper 6 mit Klemmarmen 5, und aus einer Hülse 2 mit von innen nach außen keilförmig ausgeformten Ausnehmungen 4 besteht.

Der Anschluß der Klemmvorrichtung mit einer nicht dargestellten RJ 45-Buchse kann über eine Anschlußplatte 9 erfolgen, die mit dem Klemmkörper 1 und mit einer Halte- und Verstärkungshülse 10 verbunden ist.

Die Kabelschirmung wird elektrisch leitend mit dem elektrisch leitenden Klemmkörper 1 und dieser wird über die Anschlußplatte 9 mit der Schirmung beispielsweise der RJ 45-Buchse verbunden, so daß eine geschlossene Schirmung vom Kabel zur Buchse gewährleistet ist.

Die Halte- und Verstärkungshülse 10 wird von oben so durch die Anschlußplatte 9 gesteckt, daß zwei Zungen 12 der Halte- und Verstärkungshülse 10 in zwei Ausnehmungen 13 der Anschlußplatte 9 rasten und dadurch gegen Verdrehen gesichert sind. Die Halte- und Verstärkungshülse 10 mit der daran befestigten Anschlußplatte 9 wird in den Klemmkörper 1 eingebracht und mit diesem über Laschen 14, die nach außen umgebogen werden, verbunden, so daß die Anschlußplatte 9 auf dem Klemmkörper 1 fest verankert ist. Der so gebildete Verbund aus der Halte- und Verstärkungshülse 10, der Anschlußplatte 9 und dem Klemmkörper 1 wird in die Hülse 2 geschoben. Der Klemmkörper 1 ist dadurch gegenüber der Hülse 2 festgelegt.

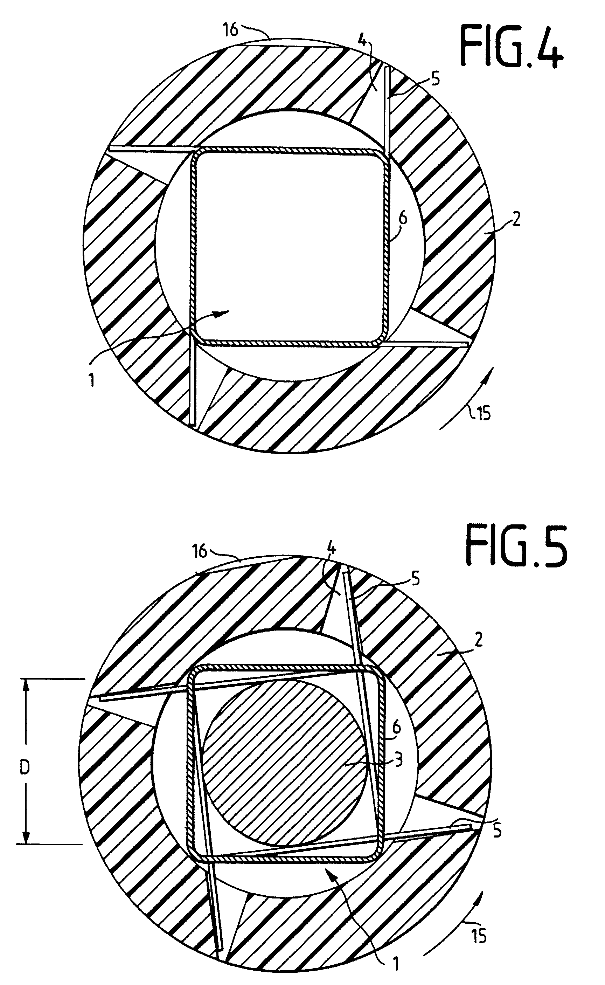

Ein in der Fig. 1 nicht dargestelltes Kabel wird mit der Schirmung in den Klemmkörper 1 geschoben und dort durch Verdrehen der Hülse 2 in Pfeilrichtung 15 entgegengesetzt zum Uhrzeigersinn über die Klemmarme 5 des Klemmkörpers 1, die in die Ausnehmungen 4 der Hülse 2 eingreifen, festgeklemmt. Der Grundkörper 6 des Klemmkörpers 1 ist gegenüber der Hülse 2 wie oben beschrieben fixiert und wird durch die Drehung der Hülse 2 in seiner Lage nicht verändert, d.h., der Grundkörper 6 wird nicht gedreht. Die Durchmesserveränderung und damit die Klemmwirkung auf das Kabel resultiert aus der Durchmesserverringerung zwischen den Klemmarmen 5 (Figuren 4 bis 9). Mit einer einzigen Ausführungsform können Durchmesserveränderungen von z.B. 10 mm bis 3 mm erfolgen.

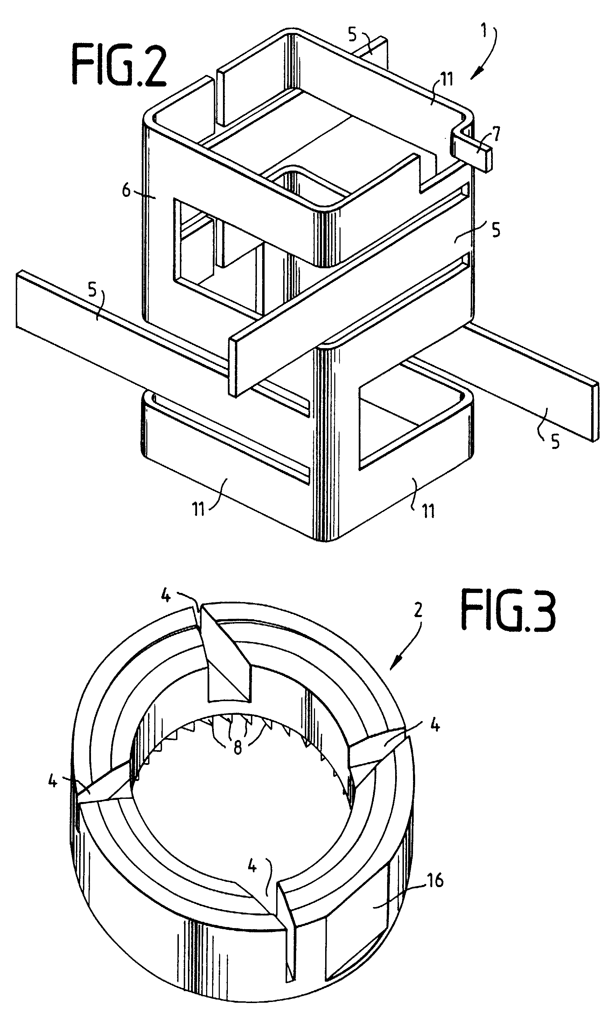

In der Fig. 2 ist der Klemmkörper 1 in einer quadratischen Ausführungsform gezeigt. Der Grundkörper 6 wird aus beweglichen Armen 11 gebildet, die einstückig miteinander verbunden sind. Aus dem Grundkörper 6 sind beispielsweise vier Klemmarme 5 in vier unterschiedlichen Ebenen durch Freischnitte herausgeformt.

Aus einem der Arme 11 ist eine Ratsche 7 herausgebogen, die nach dem Einbringen des Klemmkörpers 1 in die Hülse 2 nach Fig. 3 in eine innenliegende Zahnung 8 der Hülse 2 eingreift und bei der Hülsendrehung eine Arretierung des Klemmkörpers 1 in einer gewünschten Stellung in der Hülse 2 bewirkt.

Die Fig. 3 zeigt des weiteren die vier keilförmigen Ausnehmungen 4, in welche die vier Klemmarme 5 des Klemmkörpers 1 (Fig. 2) eingreifen.

In der Fig. 4 ist die Klemmvorrichtung im zusammengebauten Zustand gezeigt. Der Klemmkörper 1 ist in die Hülse 2 eingeführt und die Klemmarme 5 befinden sich im wesentlichen spannungsfrei in den Ausnehmungen 4.

Eine am oberen Rand der Hülse 2 erkennbare Abflachung 16 (Fig. 3 bis 6) dient der Orientierung zur Lage der Hülse 2.

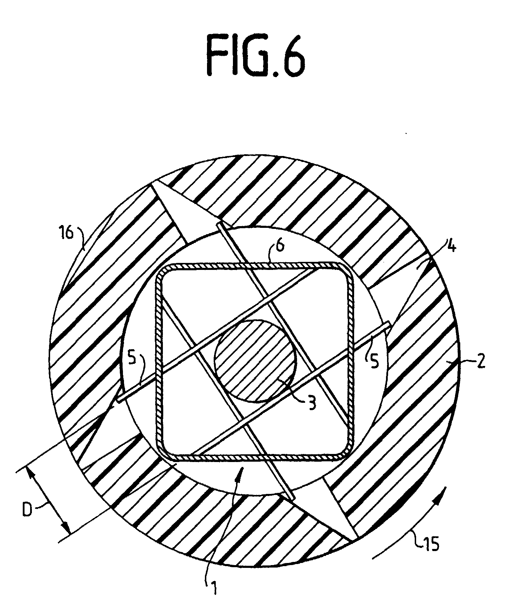

In der Fig. 5 ist die Klemmvorrichtung mit einem eingebrachten Kabel 3 von maximal möglichem Durchmesser gezeigt. Zur Verspannung bzw. Klemmung des Kabels 3 ist die Hülse 2, soweit es der Kabeldurchmesser erlaubt, gedreht. Dadurch sind die Klemmarme 5 des Klemmkörpers 1 gespannt und üben auf die Seitenflächen der Ausnehmungen 4 in der Hülse 2 einen entsprechenden Druck aus.

In der Fig. 6 ist die Klemmvorrichtung mit einem eingebrachten Kabel 3 gezeigt, welches einen geringen Durchmesser aufweist. Zur Verspannung des Kabels 3 ist die Hülse 2 soweit gedreht, daß die Klemmarme 5 des Klemmkörpers 1 gerade noch in den Ausnehmungen 4 der Hülse 2 einen Halt finden. Der als Rahmen dienende Grundkörper 6 des Klemmkörpers 1 bleibt deutlich unverändert, während die Klemmarme 5 durch die Drehung der Hülse 2 zusammengeschoben werden und die Klemmung des Kabels 3 bewirken. Der Verbindungspunkt der jeweiligen Klemmarme 5 mit dem Grundkörper 6 bildet dabei den jeweiligen Drehpunkt für das Zusammendrehen der Klemmarme 5 in Pfeilrichtung 15 entgegengesetzt zum Uhrzeigersinn zu einem neuen klemmenden Durchmesser D.

Die Klemmvorrichtung kann aus geeignetem Kunststoff gefertigt sein. Der Klemmkörper 1 ist jedoch aus einem einteiligen Stanzteil gebildet, wobei der Klemmkörper aus einem elektrisch leitenden Material gefertigt ist, so daß die Klemmvorrichtung als Kabelklemmvorrichtung auch zur Fortführung der Kabelschirmung vorgesehen sein kann.

Die Hülse 2 kann außen mit Griffmulden versehen sein.

### BEZUGSZEICHENLISTE

- 1: Klemmkörper
- 2: Hülse
- 3: Gegenstand (Kabel)
- 4: Ausnehmung
- 5: Klemmarm
- 6: Grundkörper
- 7: Ratsche
- 8: Zahnung
- 9: Anschlußplatte
- 10: Halte- und Verstärkungshülse
- 11: beweglicher Arm
- 12: Zunge
- 13: Ausnehmung
- 14: Lasche
- 15: Pfeilrichtung
- 16: Abflachung

- D: Durchmesser

## Patentansprüche

1. Klemmvorrichtung, insbesondere Kabelklemmvorrichtung für die Kommunikations- und Datentechnik, aus einem Grundkörper (6), bestehend aus einem Klemmkörper (1), in den der festzuklemmende Gegenstand (3) eingebracht ist, und einer Hülse (2), wobei der Klemmkörper (1) mindestens zwei Klemmarme (5) und die Hülse (2) mindestens zwei Ausnehmungen (4) aufweist, und wobei der Klemmkörper (1) in die Hülse (2) geschoben ist und die Klemmarme (5) des Klemmkörpers (1) in die Ausnehmungen (4) der Hülse (2) eingreifen ,
**dadurch gekennzeichnet**
daß der Klemmkörper ein einteiliges Stanzteil mit freigeschnittenen Klemmarmen (5) ist, und daß durch die Drehung der Hülse (2) gegenüber dem feststehenden Klemmkörper (1) die Klemmarme (5) den klemmenden Innendurchmesser (D) des Klemmkörpers (1) verringeren.

2. Klemmvorrichtung nach Anspruch 1, dadurch gekennzeichnet, daß die Klemmarme (5) in unterschiedlichen Ebenen aus dem Klemmkörper (1) herausgeführt sind.

3. Klemmvorrichtung nach den Ansprüchen 1 und 2, dadurch gekennzeichnet, daß der Klemmkörper (1) einen elektrisch leitenden Schirmkontakt bildet.

4. Klemmvorrichtung nach Anspruch 1, dadurch gekennzeichnet, daß der Klemmkörper (1) eine Ratsche (7) aufweist, die in eine innenliegende Zahnung (8) der Hülse (2) eingreift.

5. Klemmvorrichtung nach Anspruch 1, dadurch gekennzeichnet, daß eine Halte- und Verstärkungshülse (10) in den Grundkörper (6) des Klemmkörpers (1) eingebracht ist.

6. Klemmvorrichtung nach Anspruch 1, dadurch gekennzeichnet, daß der Grundkörper (6) des Klemmkörpers (1) rund oder mehreckig ausgeformt ist.

## Claims

1. Clamping device, in particular a cable clamping device for communications technology and data systems technology, made from a basic body (6), comprising a clamping member (1) into which the object (3) to be clamped is inserted, and a sleeve (2), the clamping member (1) having at least two clamping arms (5), and the sleeve (2) having at least two cutouts (4), and the clamping member (1) being pushed into the sleeve (2), and the clamping arms (5) of the clamping member (1) engaging in the cutouts (4) of the sleeve (2), characterized in that the clamping member is a unipartite punched part with clamping arms (5) which are cut free, and in that by rotating the sleeve (2) with respect to the fixed clamping member (1) the clamping arms (5) reduce the clamping inside diameter (D) of the clamping member (1).

2. Clamping device according to Claim 1, characterized in that the clamping arms (5) are led out of the clamping member (1) in different planes.

3. Clamping device according to Claims 1 and 2, characterized in that the clamping member (1) forms an electrically conducting shield contact.

4. Clamping device according to Claim 1, characterized in that the clamping member (1) has a ratchet (7) which engages in inner teeth (8) of the sleeve (2).

5. Clamping device according to Claim 1, characterized in that a holding and reinforcing sleeve (10) is inserted into the basic body (6) of the clamping member (1).

6. Clamping device according to Claim 1, characterized in that the basic body (6) of the clamping member (1) is of a round or polygonal shape.

## Revendications

1. Dispositif de serrage, en particulier dispositif de serrage par câble pour la technique de communication et de l'informatique, fait d'un corps de base (6), constitué d'un corps de serrage (1), dans lequel est introduit l'objet (3) à serrer de manière fixe, et d'un manchon (2), le corps de serrage (1) présentant au moins deux bras de serrage (5) et le manchon (2), au moins deux creux (4), et le corps de serrage (1) étant poussé dans le manchon (2) et les bras de serrage (5) du corps de serrage (1) s'engrenant dans les creux (4) du manchon (2),
caractérisé en ce que
le corps de serrage est une pièce découpée d'un seul tenant avec des bras de serrage libérés par découpage (5), et en ce que, par la rotation du manchon (2) par rapport au corps de serrage fixe (1), les bras de serrage (5) réduisent le diamètre interne de serrage (D) du corps de serrage (1).

2. Dispositif de serrage suivant la revendication 1, caractérisé en ce que les bras de serrage (5) sont sortis du corps de serrage (1) à différents niveaux.

3. Dispositif de serrage suivant les revendications 1 et 2, caractérisé en ce que le corps de serrage (1) forme un contact de protection conducteur de l'électricité.

4. Dispositif de serrage suivant la revendication 1, caractérisé en ce que le corps de serrage (1) présente un cliquet à percer (7), qui s'engrène dans une denture (8) située à l'intérieur du manchon (2).

5. Dispositif de serrage suivant la revendication 1, caractérisé en ce qu'un manchon de maintien et de renforcement (10) est introduit dans le corps de base (6) du corps de serrage (1).

6. Dispositif de serrage suivant la revendication 1, caractérisé en ce que le corps de base (6) du corps de serrage (1) est de forme ronde ou polygonale
